(19) Europäisches Patentamt / European Patent Office / Office européen des brevets

(11) **EP 2 407 926 B1**

(12) **EUROPEAN PATENT SPECIFICATION**

(45) Date of publication and mention
of the grant of the patent:
**09.09.2015 Bulletin 2015/37**

(51) Int Cl.:
*G06T 5/00* *(2006.01)*     *G06T 5/50* *(2006.01)*
*H04N 5/265* *(2006.01)*

(21) Application number: **11005736.1**

(22) Date of filing: **13.07.2011**

(54) **Image processing apparatus, image processing method, and recording medium**

Bildverarbeitungsvorrichtung, Bildverarbeitungsverfahren und Aufzeichnungsmedium

Appareil de traitement d'images, procédé de traitement d'images et support d'enregistrement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2010 JP 2010162290**

(43) Date of publication of application:
**18.01.2012 Bulletin 2012/03**

(73) Proprietor: **Canon Kabushiki Kaisha
Tokyo (JP)**

(72) Inventor: **Sumi, Naoki
Ohta-ku,
Tokyo (JP)**

(74) Representative: **WESER & Kollegen
Radeckestraße 43
81245 München (DE)**

(56) References cited:
**EP-A1- 2 134 079       WO-A2-2007/015374
US-A1- 2008 205 854     US-A1- 2010 157 079**

**Description**

BACKGROUND OF THE INVENTION

Field of the Invention

The present invention is a technique relating to a processing apparatus and a processing method of image data and, more specifically, relates to a technique to combine a plurality of images.

Description of the Related Art

Conventionally, there has been known a technique to combine a plurality of images to improve image quality. From a motion picture or by continuous photographing by a camera, a plurality of images successive in terms of time can be obtained. These images may contain noises therein. For example, it is known that noises are produced in filming a motion picture by a digital video camera when light is converted into an electric signal by an image pickup device. There is a possibility that even a weak noise turns into a conspicuous noise after a step of amplifying a signal. Consequently, when photographing in a dark scene that requires considerably amplifying a signal, there are many images in which noises are more conspicuous than when photographing in a bright scene.

Such noises occur randomly, and therefore, it is possible to reduce noises by matching the positions of a plurality of successive images and averaging them. In Japanese Patent Laid-Open No. 2002-223374, a technique to remove noises by combining pixels in a plurality of frames (images) by making use of the principles described above.

However, when a plurality of frames is combined by averaging or weighted averaging, there has been a problem such that deterioration in image occurs at the contour part. More specifically, not only the noise part but the contour part is also averaged by the operation of composition and the contour is dulled. In Japanese Patent Laid-Open No. 2002-223374, any solution for the deterioration of the edge or contour part due to the composition of a plurality of images is not at all described.

US2008/205854 A1 discloses a system and method for video noise reduction using a unified three-dimensional non-linear filtering, with the technique being based on weight averaging pixels of the filter's output value in a three-dimensional neighborhood, in space and time, of the filter's output value. The weights can be computed for individual factors, such as distance, or regional differences, or can be combined into a weight that is indicative of all individual weights.

EP 2 134 079 A1 discloses an image processing apparatus and method, where sharpness is calculated in all of focus-bracketed images on a pixel basis. Then, a first reference value indicating an image of the plurality of images to which a pixel whose sharpness is the highest among the pixels located on the identical positions in the plurality of images belongs is obtained on each pixel of the images, and a second reference value is calculated based on the first reference value on each pixel by spatially smoothing the first reference value on each pixel based on the first reference values on adjacent pixels. The focus-bracketed images are processed based on the second reference value to generate an omni-focus image or a blur-enhanced image.

And US 2010/157079 A1 discloses a system and method to selectively combine images. In a particular embodiment, an apparatus includes a registration circuit configured to generate a set of motion vector data based on first image data corresponding to a first image and second image data corresponding to a second image. The apparatus includes a combination circuit to selectively combine the first image data and adjusted second image data that corresponds to the second image data adjusted according to the motion vector data. The apparatus further includes a control circuit to control the combination circuit to generate third image data.

SUMMARY OF THE INVENTION

The present invention provides an image processing apparatus and an image processing method to reduce the dullness of the contour in a composition result image in the composition process of a plurality of images.

The present invention in its first aspect provides an image processing apparatus as specified in claims 1 to 9.

The present invention in its second aspect provides an image processing method as specified in claims 10 to 13.

The present invention in its third aspect provides a computer executable program as specified in claim 14.

The present invention in its fourth aspect provides a computer-readable recording medium as specified in claim 15.

According to the present invention, it is possible to provide an image processing apparatus and an image processing method to reduce the dullness of the contour in the composition process of a plurality of images.

Further features of the present invention will become apparent from the following description of exemplary embodiments (with reference to the attached drawings).

BRIEF DESCRIPTION OF THE DRAWINGS

Fig. 1 is a block diagram in image processing of an embodiment;
Fig. 2 is a flowchart in image processing of an embodiment;
Fig. 3 is a graph showing characteristics of a function of an embodiment;
Fig. 4 is a graph showing characteristics of a function of an embodiment;
Fig. 5 is a graph showing characteristics of a function of an embodiment;
Fig. 6 is a graph showing characteristics of a function of an embodiment;
Fig. 7 is a graph showing characteristics of a function of an embodiment;
Fig. 8 is a graph showing characteristics of a function of an embodiment;
Fig. 9 is a flowchart in image processing of an embodiment; and
Fig. 10 is a conceptual diagram of a temporary image in image processing of an embodiment.

DESCRIPTION OF THE EMBODIMENTS

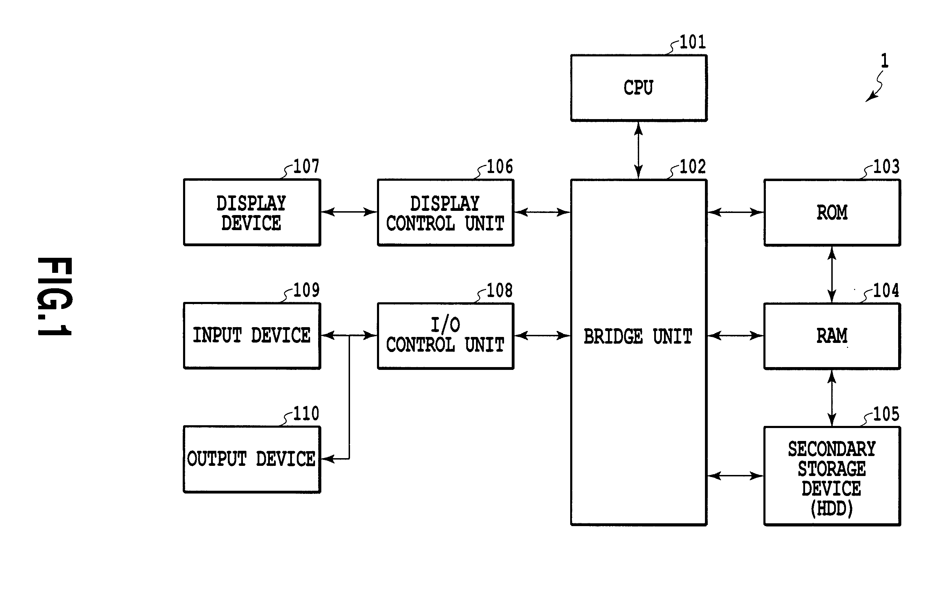

Fig. 1 shows a block diagram of an image processing apparatus 1 to embody an image processing method in an embodiment. Explanation is given on the assumption that the image processing apparatus 1 is implemented by a PC (Personal Computer) including the following configuration.

A CPU 101 is a central processing unit and controls processing by other functional blocks or devices. Control of processing is performed based on a control program deployed in a RAM (Random Access Memory) 104, to be described later. A bridge unit 102 provides a function to relay transmission/reception of data and commands performed between the CPU 101 and the other functional blocks. A ROM (Read Only Memory) 103 is a read only nonvolatile memory and stores a program called a BIOS (Basic Input/Output System). The BIOS is a program executed first when an image processing apparatus is activated and controls a basic input/output function of peripheral devices, such as a secondary storage device 105, a display control device 107, an input device 109, and an output device 110. The RAM 104 provides a storage region where fast read/write is enabled. The secondary storage device 105 is an HDD (Hard Disk Drive) that provides a large-capacity storage region. When the BIOS is executed, an OS (Operating System) stored in the HDD is executed. The OS provides basic functions that can be used by all applications, management of the applications, and a basic GUI (Graphical User Interface) It is possible for an application to provide a UI that realizes a function unique to the application by combining GUIs provided by the OS. The OS and data used in an execution program or working of another application are stored in the RAM 104 or the secondary storage device 105 according to the necessity.

A display control unit 1.06 generates, as image data of the GUI, the result of the operation by a user performed for the OS or application and controls the display on the display device 107. As the display device 107, a liquid crystal display or CRT (Cathode Ray Tube) display can be used. An I/O control unit 108 provides an interface between a plurality of the input device 109 and the output device 110. As a representative interface, mention is made of a USB (Universal Serial Bus) and PS/2 (Personal System/2).

The input device 109 includes a keyboard and mouse with which a user enters his/her intention to the image processing apparatus 1. Further, by connecting a digital camera, a storage device, such as a USB memory, a CF (Compact Flash) memory, and an SD (Secure Digital) memory card, etc., as the input device 109 it is also possible to transfer image data. A printer is connected as the output device 110 and it is possible to obtain a desired print result.

The image processing application that realizes the image processing method in the present embodiment is stored in the secondary storage device 105. The image processing application is provided as an application to be activated by the operation of a user.

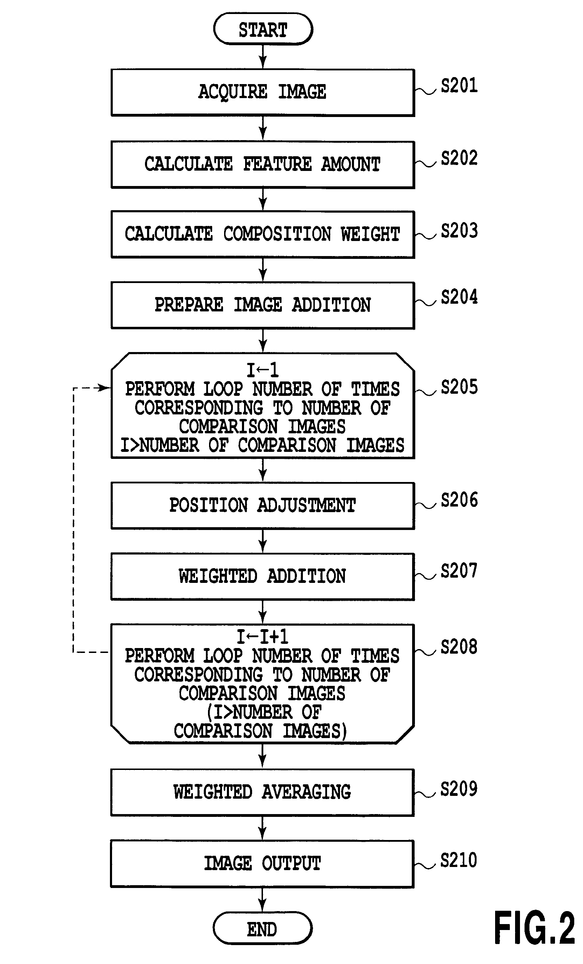

Fig. 2 is a flowchart showing a flow of image processing in the present embodiment. This processing is performed on an application by the control of the CPU 101 after the application is activated in the image processing apparatus 1. That is, this processing is performed by the collaboration of hardware including the CPU 101 and software including the application.

In S201, the application acquires a plurality of images from the input device 109 or the secondary storage device 105. Among the plurality of images, an image that is a main image of a composite image is referred to as a reference image (first image) and other images are referred to as comparison images (second image). That is, by the application (and the control of the CPU 101), a plurality of images including the reference image and comparison images for image composition is acquired. As the plurality of images, those cut out of a motion picture in units of frames or images of successive scenes by continuous photographing etc. are supposed. Even for images that are photographed at considerable intervals in terms of time, it is also possible to apply the processing to images obtained by photographing the same subject by a fixed point observation camera or an astronomical camera that follows the movement of a celestial body.

Here, an example is explained, in which a plurality of images is acquired from a motion picture. First, a user reproduces a motion picture from data stored in the secondary storage device 105 and causes the display device 107 to display images. The user confirms the displayed images and selects one frame using the input device 109. Then, the user cuts out the selected frame as still image data and takes it as a reference image. The cutting out of still image data from motion picture data can be performed by using, for example, a codec in correspondence with the motion picture. Here, the still image data is cut out in the bitmap format configured by, for example, RGB (red, green and blue) signals and stored in the region of the RAM 104.

Next, the application cuts out, as comparison images, frames before and after the frame selected as the reference image and stores them in the region of the RAM 104. This cutting-cut process is performed by cutting out the still image data in the bitmap format as in the case of the reference image. In the present embodiment, in order to acquire the comparison images, two frames before the frame selected by the user (reference image) and two frames after the frame, respectively, are cut out as still image data and thus four comparison images in total are acquired.

A method of acquiring a plurality of sill images is not limited to the above method. For example, it may also be possible to take one of still images continuously photographed as a reference image and other images as comparison images. Further, it may also be possible for the application to have a determination function and automatically select a reference image and comparison images without the selection by a user.

In S202, a feature amount (first feature amount) of the reference image acquired in S201 is calculated for each pixel. In the present embodiment, the feature amount is a value indicative of the degree of how likely it can be recognized as a contour. It is possible to find the feature amount by, for example, calculating an amount of edge or analyzing the frequency. The feature amount of the present embodiment is calculated based on an amount of difference in color or brightness between a pixel that is an object of inspection and a pixel therearound. The larger the amount of difference, the greater the value of the feature amount is. For example, the amount of difference is calculated by finding a color difference between a center pixel and each of other eight pixels, respectively, using a filter of 3 [pixels] $\times$ 3 [pixels] and calculating the sum of the color differences. Then, by normalizing the sum to a range of 0 to 255, the degree of how likely it can be recognized as a contour, which is the feature amount, can be found. The color difference is found by the distance between signal values in the RGB or Ycc color space, $\Delta E$ on the Lab color space, the absolute value of the difference in luminance, etc. That is, the feature amount of the reference image for each pixel is calculated based on the difference in color or brightness between the target pixel and the pixel therearound.

A contour can be recognized by a human when the color difference between the neighboring pixels is somewhat large. When there is no color difference between the target pixel and the neighboring pixel or when it is slight if any, the sense of sight of a human recognizes the pixels as the same color. When the color difference becomes a litter larger, it recognizes smooth gradation, and when the color difference becomes further larger, it recognizes as a contour. In general, sensor noises in a camera occur randomly for each pixel. Even if a subject of the same color is photographed, the color varies somewhat in the pixel due to the occurrence of noises. That is, noises produce a difference in color between neighboring pixels, which might not have existed in the subject, and a feature amount of a certain degree occurs in the pixel. In general, noises have a comparatively small feature amount compared to the contour of the image in many cases, although this s depends on the photographing conditions and the sensor of the camera.

Here, finding the feature amount of only the reference image without finding the feature amount of the comparison image is one of the characteristics of the present embodiment. An image having pixels in the same number as that of pixels of the reference image is created and taken as a feature amount image. The feature amount found for each pixel of the reference image is stored in the pixel having the same coordinates as those of the pixel of the feature amount image. That is, to the coordinates of the reference image, the same coordinates of the feature amount image correspond and, for example, the feature amount of the pixel having the coordinates $(x, y) = (0, 0)$ of the reference image is stored in the pixel having the coordinates $(x, y) = (0, 0)$ of the feature amount image. The reference image has three elements, that is, R, G and B, however, the feature amount image needs to have one element indicative of the feature amount.

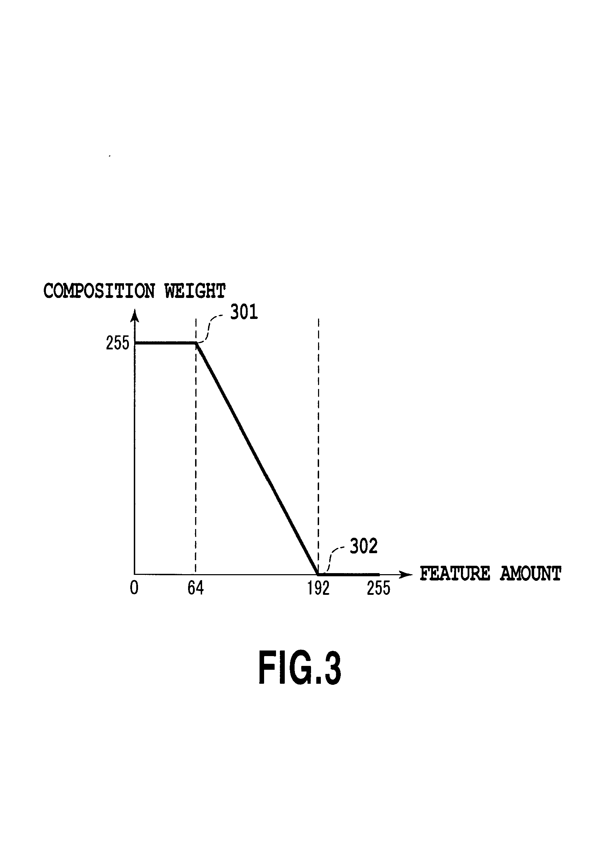

In S203, a composition weight is calculated for each pixel of the reference image. The composition weight is a weight of the comparison image with respect to a weight of the reference image when weighted averaging is performed, and is a composition ratio of pixel of each comparison image. An example of a method of calculating a composition weight is explained using Fig. 3.

Fig. 3 is a graph in which the input (horizontal axis) is a feature amount and the output (vertical axis) is a composition weight. The feature amount of the horizontal axis and the composition weight of the vertical axis are represented by values from 0 to 255. When the level of the feature amount is low (when the feature amount is 0 to 64 in Fig. 3), the weight is at its maximum, that is, 255. This means that the comparison image has the same weight with respect to the reference image in the weighted addition, to be described later. When the feature amount exceeds 64, the larger the feature amount, the smaller the composition weight becomes. When the feature amount is 192 or more, the composition weight is at its minimum, that is, 0. This means that the comparison image is caused to have no weight with respect to the reference image in the weighted addition, to be described later, that is, composition of the comparison image with respect to the reference image is not performed. The application calculates the composition weight for each pixel of the reference image using a function the characteristics of which are such that the feature amount is the input and the weight is the output as shown in Fig. 3, or a lookup table. In the case of the function, the composition weight can be found as follows.

$$\text{When (feature amount} <= 64), \text{ composition weight } = 255$$

$$\text{When (feature amount} >= 192), \text{ composition weight } = 0$$

$$\text{When } (64 < \text{feature amount} < 192), \text{ composition weight } = 255 - \{(\text{feature amount} - 64) / 128\} \times 255$$

Here, the bending of a line at a point 301 and a point 302 in Fig. 3 is explained. The region in which the feature amount is low represented by the graph in Fig. 3 corresponds to a case where there is no color difference between the pixel and the neighboring pixel, or slight if any, and in this case, the sense of sight of a human recognizes that both pixels are the same color. When a color difference becomes a little larger, it recognizes as a smooth gradation, and when it becomes further larger, it recognizes as a contour.

In the function represented by the graph in Fig. 3, when the feature amount is equal to or less than the value at the point 301, that is, when the feature amount is 0 to 64, the output value (composition value) is 255. That is, the composition weight does not change. This results from that the characteristics of noises to be reduced particularly in the input image are 0 to 64 of the feature amount. That is, this function is applied when the possibility that the pixels the feature amount of which is 0 to 64 are noises is strong. The principles are that noises are reduced by averaging the pixels of the reference image and the comparison image, and therefore, it is possible to achieve the maximum effect of noise reduction by increasing the composition ratio of the comparison image, that is, the composition weight. In addition to the above, that the feature amount is low means that a color difference from a peripheral pixel is small, and therefore, the sense of sight of a human is slightly affected even if blurring occurs due to composition.

For a pixel having a value from that at the point 301 to that at the point 302, that is, when the feature amount of the pixel is 64 to 192, the composition weight is reduced stepwise. That is, when the feature amount exceeds a predetermined threshold value, the composition weight is calculated so that the larger the feature amount, the lower the composition weight is. In other words, the composition weight is determined so that the composition weight corresponding to the first feature amount is lower than the composition weight corresponding to the second feature amount, which is smaller than the first feature amount. When the feature amount exceeds 64, this has a possibility of being a color difference caused by noises, however, there appears a possibility of being a color difference of a contour necessary for the image. As the feature amount becomes larger, the probability that this is a contour necessary for the image increases. On the contrary, as the feature amount becomes larger, the probability that noises affect the feature amount reduces. That is, while the effect to reduce noises is maintained, the risk that a necessary contour is blurred is reduced. In the present embodiment, the threshold value of the feature amount is set to 64, however, this is not limited and it is of course possible to set an arbitrary value.

After the point 302, that is, when the feature amount is 192 to 255, the composition weight of the comparison image is 0. This results from that the particularly important contour part in the input image corresponds to a feature amount of 192 to 255. That is, the pixel having a feature amount of 192 to 255 is a particularly important contour when forming the image and if blurring occurs in this part, the entire image gives an impression of blurring in many cases. In order to avoid the blurring due to averaging, the composition weight of the comparison image for the pixel is set to 0 and composition is not performed for the pixel having a feature amount of 192 to 255, and thereby, the result after the composition of the reference image and the comparison image remains the reference image. Although depending on the camera performance and photographing conditions, in many cases, a color difference from a peripheral pixel caused by noises is small. Because of this, it is rare that the feature amount caused by noises becomes as large as the feature mount at the important contour of the image.

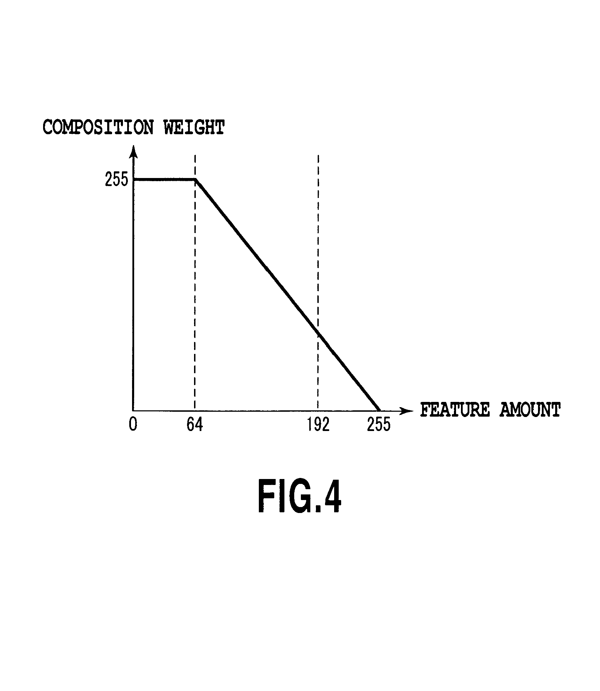

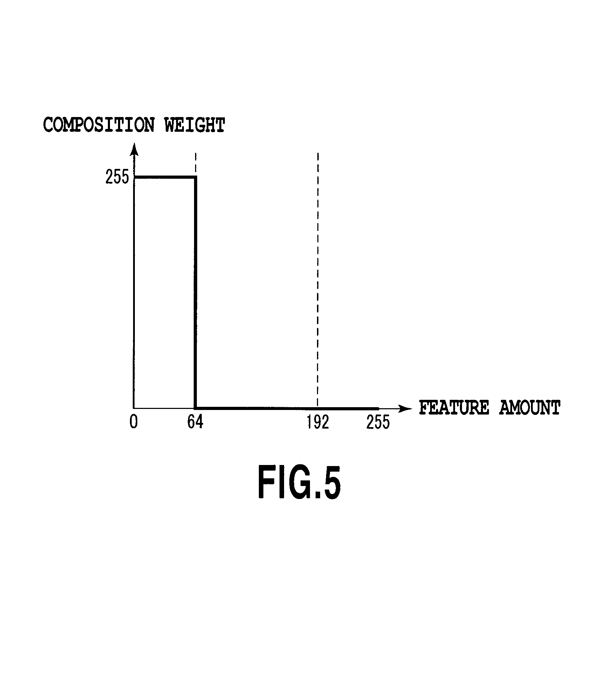

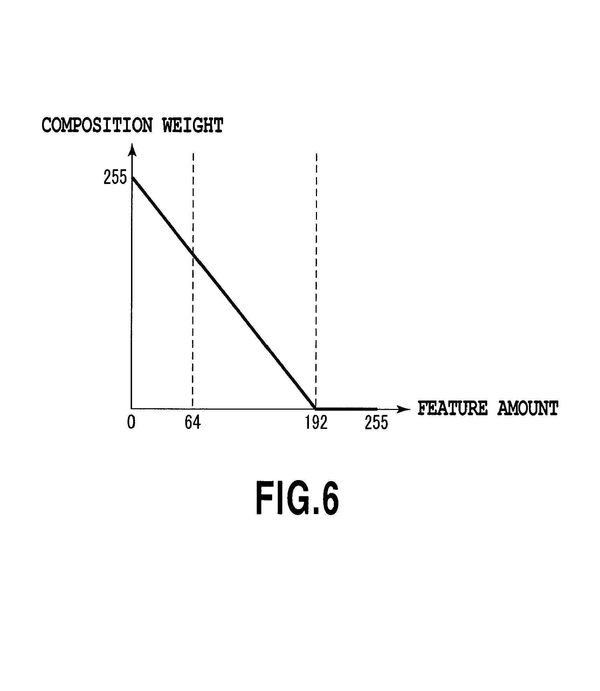

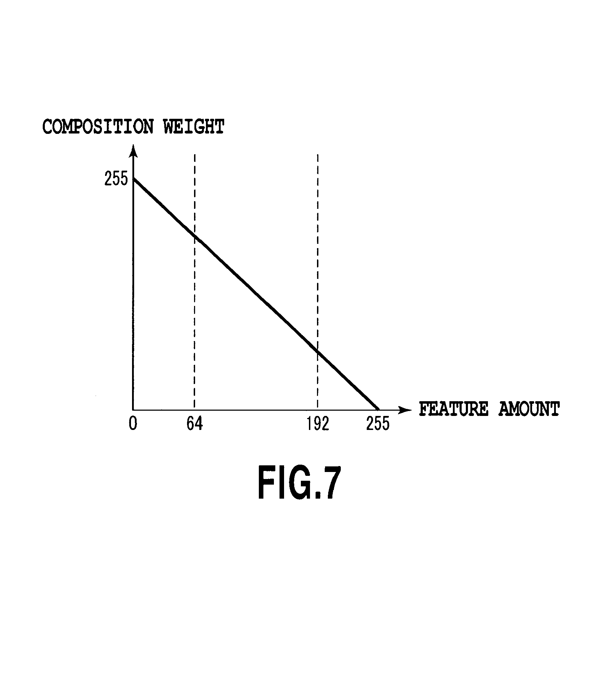

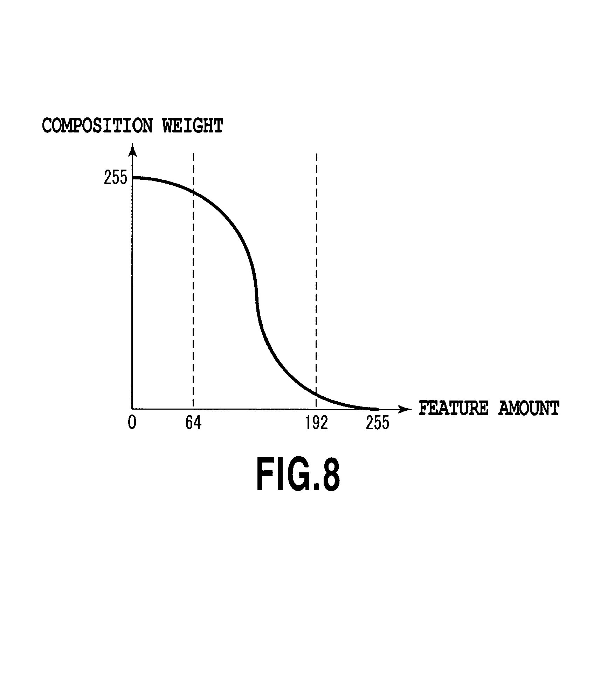

The method of calculating a composition weight is not limited to the above and in another example, such characteristics as shown in Fig. 4, Fig. 5, Fig. 6, Fig. 7, or Fig. 8 may be given. For example, when the photographing conditions and the characteristics of the camera are known and the feature amount level of noises that can occur is determined, or when the feature amount level with which to prevent blurring from occurring is determined, a composition weight is calculated by the characteristics shown in Fig. 5. If nothing is determined in particular, it is possible to averagely disperse both the risk that blurring occurs and the risk that noise reduction effect is reduced by calculating the composition weight by the characteristics shown in Fig. 7.

Further, it may also be possible to make variable the characteristics of the method of calculating a feature amount based on the reference image and the comparison image. For example, it may also be possible to determine the size of a filter when calculating a feature amount according to the contents of the image based on the result of the analysis of the reference image and the comparison image. Further, it may also be possible to enable a user to input a feature amount using the input device 109. At this time, it may also be possible to set the composition weight for a pixel having a feature amount of 0 to a feature amount specified by a user to a high value, such as 255.

As described above, according to the processing in S203, the composition weight of the comparison image is calculated based on the feature amount for each pixel of the reference image calculated in S202. The composition weight found for each pixel as described above is stored in the memory to form a weight image. The composition weight is stored in the order so that the weight image and the reference image correspond to each other at the same coordinates. Here, that the composition weight is calculated using the feature amount of the reference image and the feature amount of the comparison image is not used is one of the characteristics of the present invention. That is, it is possible to perform calculation within one image and it is not necessary to perform processing using feature amounts of a plurality of images. As a result of that, it is possible to increase the processing speed of the entire image composition process.

In such a case where feature amounts of a plurality of images are used as described above including also a case where processing is performed using feature amounts of a plurality of images, it is possible to improve the precision of calculation of a feature amount.

In S204 in Fig. 2, preparation for image addition is done. The application secures a region of a weighted total image within the RAM 104. A weighted total image is a memory region that stores a total of signal value data and weights with which the reference image and the comparison image are weighted, respectively, and added. In the case of an RGB signal image, the weighted total image requires four elements of [R, G, B and weight]. Each element is allocated in the memory region in order of, for example, R, G, B and weight. These four elements are stored in the RAM 104 in the number corresponding to the number of pixels of the reference image. The pixel of the reference image and the pixel of the weighted total image correspond to each other at the same coordinates.

Here, the signal values of R, G and B of the reference image multiplied further by 255 as a numerical value of the weight of the reference image, respectively, are stored as values of elements R, G and B, respectively, and 255 is stored as an element of weight for all the pixels of the weighted total image allocated to the memory region. The numerical value 255, which is the weight element, is used uniformly for all the pixels of the reference image. If it is assumed that the signal values of the reference image in one pixel at the same coordinates are $R_m$, $G_m$ and $B_m$, the weight is W (= 255), and the values of the weighted total image are $R_s$, $G_s$, $B_s$ and $W_s$, the values of the weighted total image can be expressed by the following expressions. Here, [←] means "stored into".

$R_s \leftarrow R_m \times W$
$G_s \leftarrow G_m \times W$
$B_s \leftarrow B_m \times W$
$W_s \leftarrow W$

$R_s$, $G_s$ and $B_s$ are the weighted total of the red, green and blue signal values, respectively, and $W_s$ represents the total of the weights.

The storing described above is performed in all the pixels. That 255 is stored as the weight in all the pixels means that the weight of the reference image is 255.

The loop of processing from S205 to S208 in Fig. 2 is performed the number of times corresponding to the number of reference images. As an initial value, 1 is substituted for variable I and the expression (I > number of comparison images) is the condition of exit. Until this expression holds, processing in the loop is performed repeatedly. For explanation, the first comparison image is represented as the comparison image [1], the next comparison image as the comparison image [2], the next comparison image as the comparison image [3], and so on, and each comparison image is used in the loop. The comparison image used in the loop is represented as the comparison image [I] using variable I.

In S206 in Fig. 2, the positions of the reference image and the comparison image [I] are matched. Here, the coordinates of the comparison image [I] corresponding to the coordinates of the reference image are found. As a method of finding corresponding coordinates, the publicly-known technique, such as the block matching method and the gradient method, is used. When finding the coordinates of the comparison image corresponding to the coordinates of the reference image, it is not necessary to calculate the coordinates of all the pixels included in the reference image. That is, it may also be possible to find corresponding coordinates of part of the pixels of the reference image and determine corresponding coordinates of the peripheral pixels based on the corresponding coordinates found. Due to this, it is possible to reduce the load of performing position adjustment of the reference image and the comparison image. Further, when performing position adjustment of a plurality of images according to part of the pixels of the image, it is possible to improve the precision of position adjustment by performing position adjustment according to characteristic positions, such as a corner at which edges cross. Because of this, it may also be possible to specify a feature point in the reference image to find corresponding coordinates in the comparison image based on the feature amount of the pixel found in S202. Then, the position adjustment of the reference image and the comparison image are performed by finding the coordinates in the comparison image corresponding to the feature point.

Based on the corresponding coordinates found as described above, the comparison image [I] is converted according to the coordinates of the reference image and stored in the temporary image. That is, the temporary image is an image of the comparison image [I], the coordinates of which are converted so as to correspond to the coordinates of the reference image in order to adjust the positions of the reference image and the comparison image [I]. Further, the temporary image is an image for which a region is secured in the memory and has three elements, that is, R, G and B, like the comparison image [I]. The temporary image has the vertical pixels and the horizontal pixels in the same number as that of the reference image and the coordinates of the reference image and the coordinates of the temporary image correspond to each other, respectively. When it is known that the camera or the subject has not moved, the position adjustment is not indispensable and the comparison image [I] is used as the temporary image as it is.

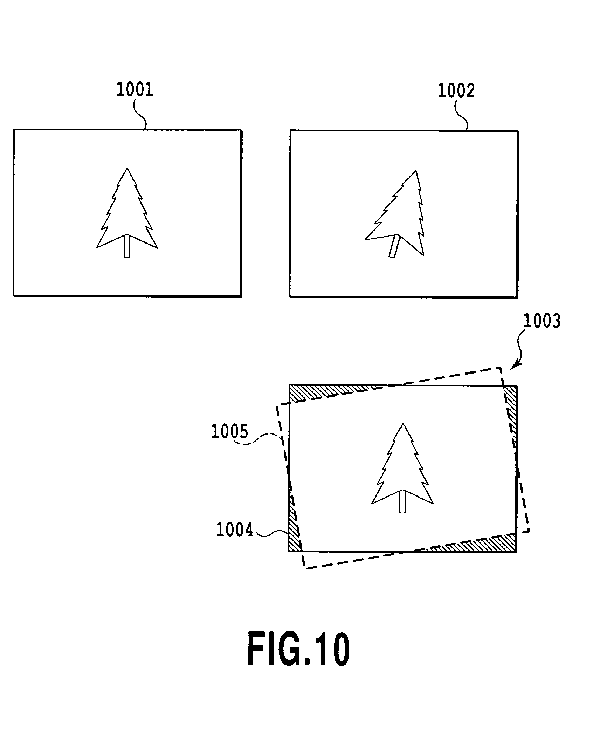

The temporary image is explained using Fig. 10. Reference numeral 1001 represents the reference image and 1002 represents the comparison image [I] to be combined therewith. With respect to the reference image 1001, the coordinates, angles, and size of the subject are changed in the comparison image 1002 because the camera has moved during filming etc. Reference numeral 1003 represents the temporary image. If the positions of the reference image 1001 and the comparison image [I] 1002 are matched by converting the coordinates of the comparison image [I] so as to agree with the coordinates of the reference image 1001, the comparison image [I] 1002 will be as shown by 1003. The reference image is represented by a solid line rectangle 1004 and the comparison image [I] is deformed as a broken line rectangle 1005 after its position is matched with the position of the reference image. The temporary image is created so that its coordinates correspond to those of the reference image, and therefore, the temporary image is located as the solid line rectangle 1004. Here, the slashed parts within 1004 are the parts where pixels of the comparison image [I] do not exist with respect to the reference image. For the pixels corresponding to the slashed parts in the temporary image, negative values are input as the R, G and B signal values to indicate that these pixels do not exist.

In S207 in Fig. 2, weighted addition is performed. Here, the temporary image is weighted and added to the weighted total image. The signal value of the pixel of the temporary image multiplied by the value of the same coordinate of the weighted image is added to the value of the same coordinate of the total image and stored in the same coordinates of the weighted total image again. That is, if it is assumed that signal values of the temporary image in one pixel on the same coordinate are Rt, Gt and Bt, the value of the weighted image is W, and the values of the weighted total image are Rs, Gs, Bs and Ws, the weighted addition is represented by the following expressions. Rs, Gs and Bs represent weighted totals of the red, green and blue signal values, respectively, and Ws represents the total of weights. Here, [←] means "stored into".

Rs ← Rt × W + Rs
Gs ← Gt × W + Gs
Bs ← Bt × W + Bs
Ws ← W + Ws

Rs, Gs and Bs on the right sides of the expressions represent values before the processing is performed and Rs, Gs and Bs on the left sides represent variables for which the values on the right sides are substituted. That is, by this processing, the calculation on the right side is performed and the left side is updated. As the initial values of Rs, Gs and Bs, the values of the weighted total image by the signal values of the reference image described above are stored. The value used to weight the temporary image is sequentially added to Rs, Gs and Bs, in the loop.

The above-mentioned weighted addition is performed for all the pixels of the temporary image. However, there is a case where there exists a pixel that does not have a pixel value to be combined in the temporary image as described above. For such a pixel, the weighted addition described above is not performed.

As described in the explanation of S203, the reference image and the weight image correspond to each other at the same coordinates. As described in the explanation of S204, the reference image and the weighted total image correspond to each other at the same coordinates. As described in the explanation of S206, the reference image and the temporary image correspond to each other at the same coordinates. That is, the reference image, the weight image, the weighted total image, and the temporary image correspond to one another at the same coordinates, and therefore, reference is easy.

In S208, the exit of the loop is determined. To variable I, 1 is added and the expression (variable I > number of comparison images) holds, the loop is exited because it means that the processing of all the comparison images is completed. If the processing of all the comparison images is not completed, the step returns to S205 and the processing of the comparison image [I] is performed. Because 1 is added to variable 1 as described above, the comparison image [I] represents an image different from that in the previous loop. If (variable I > number of comparison images) holds, the processing of all the comparison images is completed, and therefore, the step is proceeded to S209, the next step.

In S209, weighted averaging is performed. In the memory, an image region for output is secured to form an output image. One pixel of the output image has three elements R, S and G, which are signal values of colors and the number of the vertical pixels and the number of the horizontal pixels are the same as those of the reference images. The weighted averaging is performed by dividing the weighted total (Rs, Gs and Bs) of each signal by the total of weights (Ws) for each pixel of the weighted total image and storing the obtained value to the pixel of the output image. If it is assumed that the signals of the pixel of the output image are Ro (pixel value of the red signal) Go (pixel value of the green signal), and Bo (pixel value of the blue signal), then, Ro, Go and Bo can be represented by the following expressions.

Ro ← Rs / Ws
Go ← Gs / Ws
Bo ← Bs / Ws

The above-mentioned weighted averaging is performed for all the pixels and the output image is completed.

As described above, according to the processing in S204 to S209, a plurality of images including the reference image and the comparison image acquired in S201 is combined by weighted averaging based on the composition weight calculated in S203.

In S210, the image is output. The output image in S209 is saved in an image file, such as BMP and JPEG. The output is not limited to this and the output may be displayed on a display, which is a display device, or the output is transmitted to an output device and printed in an image.

As described above, according to the processing shown in Fig. 2, a plurality of images including the reference image and the comparison image acquired for image composition is acquired and the feature amount of the reference image is calculated. Based on the calculated feature amount of the reference image, the composition weight of the pixel of the comparison image corresponding to the position of each pixel of the reference image is calculated. Based on the calculated composition weight, a plurality of images including the reference image and the comparison image is combined by weighted averaging.

By combining a plurality of images using the feature amount of the image and the weighted averaging as described above, it is possible to obtain an image in which deterioration of the contour part is slight and noises are reduced. Further, only the feature amount of the reference image is used and it is not necessary to find the feature amount of the comparison image, and therefore, the processing does not produce any waste in terms of speed. Furthermore, the composition weight is calculated using the feature amount of the reference image and the calculation processing of the feature amount of the comparison image is not necessary, and therefore, it is possible to increase the processing speed of the entire image composition process.

In the explanation given above, the example is explained, in which the feature amount of the pixel included in the reference image is calculated. Next, an example is explained, in which the feature amount of the pixel included in the comparison image is calculated.

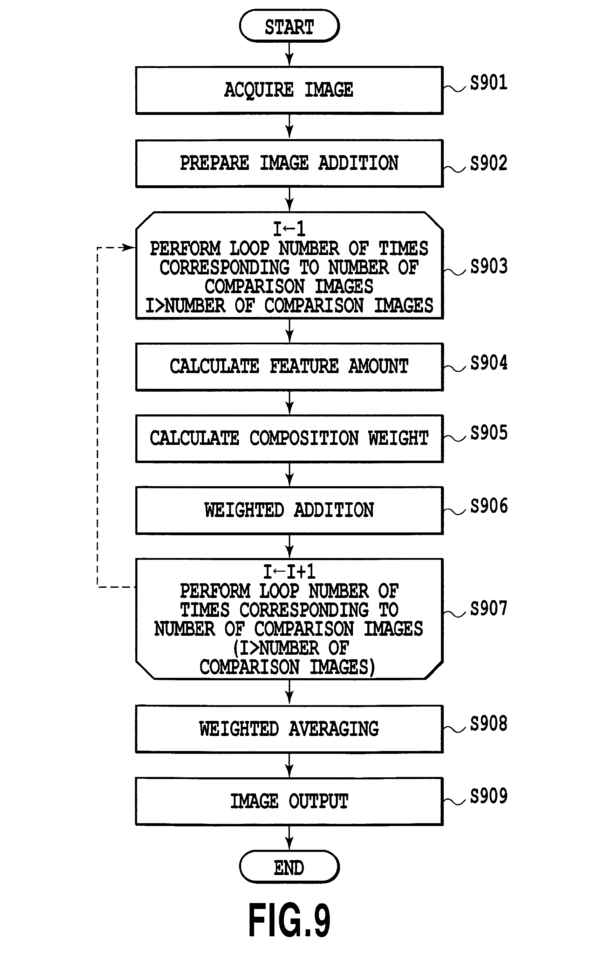

Fig. 9 is a flowchart showing a flow of processing in the present embodiment. This processing is performed on an application by the control of the CPU 101. after the application is activated in the image processing apparatus 1.

In S901, the application acquires a plurality of images from the input device 109 or the secondary storage device 105. Among the plurality of images, an image that is the main image of a composite image is taken as a reference image and other images as comparison images. This processing is the same as that explained in S201 in Fig. 2, and therefore, its detailed explanation is omitted.

In S902 in Fig. 9, preparation for image addition is done. This processing is the same as that explained in S204 in Fig. 2, and therefore, its detailed explanation is omitted.

From S903 in Fig. 9, the loop is performed in the number of the comparison images. As an initial value, 1 is substituted for variable I, an expression (I > number of comparison images) is taken as the exit condition, and the processing in the loop is performed repeatedly until this expression holds. For explanation, the first comparison image is represented as the comparison image [1], the next comparison image as the comparison image [2], the next comparison image as the comparison image [3], and so on, and the comparison image used in the loop is represented as the comparison image [I] using variable I.

In S904 in Fig. 9, the feature amount of the temporary image is calculated for each pixel. As in the calculation of the feature amount of the reference image in S202 in Fig. 2, here, the feature amount of the temporary image is calculated and stored in the feature amount image. As in S206 in Fig. 2, the comparison image [I] may be deformed according to the position of the reference image and stored in the temporary image, however, for the sake of simplification of explanation, a scene in which the position of the reference image is the same as that of the comparison image [I] is supposed. Consequently, the comparison image [I] is used as the temporary image as it is and in S904, the feature amount of the temporary image is calculated for each pixel. Here, that the feature amount of only the temporary image, which is the comparison image [I], is calculated is one of the characteristics of the present embodiment. The feature amount calculation method is the same as that in S202 described above, and therefore, its detailed explanation is omitted.

In S905, the composition weight of the temporary image is calculated for each pixel and stored in the weight image. By taking the value of each pixel of the feature amount image created in S904 as an input, the composition weight of each pixel is calculated by the function. In the function, the relationship between the feature amount and the composition weight has characteristics as shown in Fig. 3. Here, that the composition weight is calculated using the feature amount of the temporary image, which is the comparison image [I], but not using the feature amount of the reference image is one of the characteristics of the present embodiment. That is, it is not necessary to compare the feature amounts between images. As a result of that, it is possible to increase the processing speed of the entire image composition process. Other processing in S905 is the same as that in S203 in Fig. 2 and already explained, and therefore, its detailed explanation is omitted here.

In S906, weighted addition is performed in all the pixels as in 3207. Here, as the weight, the weight image of the temporary image found in S905 is used. Others are the same as those in S207, and therefore, their detailed explanation are omitted.

In S907, the exit of the loop is determined. This is the same as that in S208, and therefore, its detailed explanation is omitted.

In S908, the weighted averaging is performed. This is the same as the processing in S209, and therefore, its detailed explanation is omitted.

In S909, output of an image is performed. This is the same as the processing in S210, and therefore, its detailed explanation is omitted.

As described above, according to the composition processing of a plurality of images shown in Fig. 9, it is possible to obtain an image in which deterioration of the contour part is slight and noises are reduced.

In the above-described explanation, when combining a plurality of comparison images with the reference image, a predetermined number of comparison images are weighted and combined according to the feature amount of the pixel included in the image.

However, this is not limited and for example, it may also be possible to vary the number of comparison images to be combined with the image according to the feature amount of the pixel. For example, where there are four comparison images, a pixel included in the four comparison images is combined with respect to the pixel for the pixel having a large feature amount. On the other hand, for a pixel having a large feature amount, the number of images to be combined with the image is reduced less than four or composition is not performed.

Due to this, the number of images to be combined is reduced for the pixel having a large feature amount, and therefore, it is possible to suppress the contour part in the image in the composition result from being dulled by the composition, as in the explanation described above.

Further, when determining the number of comparison images to be combined according to the feature amount of the pixel included in the image as described above, it is only required to switch between using or not using the comparison image for each pixel, and therefore, it is possible to perform composition for each pixel of the reference image by simple processing.

Furthermore, in the explanation described above, a still image is cut out from a motion picture and a still image of high image quality is obtained. It is also possible to obtain a motion picture of high image quality by re-configuring a motion picture using such a plurality of images of high image quality.

Other Embodiments

Aspects of the present invention can also be realized by one or more computer of a system or apparatus (or devices such as one or more CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer(s) for example via a network or from a recording medium of various types serving as the memory device (e.g., computer-readable medium).

**Claims**

1. An image processing apparatus comprising:

an acquisition means for acquiring (S201) a plurality of images including a reference image and a comparison image to be combined by combining corresponding pixels;
a calculation means for calculating (S202) an edge amount of each pixel in the reference image to be combined with a corresponding pixel in the comparison image, the edge amount corresponding to a degree of an edge for the pixel;
a determination means for determining (S203) composition weights of pixels in the comparison image with respect to a weight of corresponding pixels in the reference image when weighted averaging is performed, based on the edge amount of the corresponding pixels in the reference image calculated by the calculation means; and

a composition means for combining (S207, S209) pixels of the reference image and of the comparison image by weighting corresponding pixels based on the composition weights determined by the determination means; **characterized in that** the determination means is adapted to determine, for each pixel in the comparison image to be combined with the corresponding pixel in the reference image, a composition weight with respect to the corresponding pixel in the reference image based on the edge amount of the corresponding pixel in the reference image such that:

the composition weight (302) for a first edge amount (192) is lower than the composition weight (301) for a second edge amount (64), wherein the second edge amount is smaller than the first edge amount (1 92), and

the determined composition weight is, regardless of the edge amount of the reference image and an edge amount of the comparison image, equal or less than the composition weight of the corresponding pixel in the reference image for all pixels to be combined.

2. The apparatus according to claim 1, wherein the determination means is adapted to determine the composition weight without an using edge amount of the comparison image.

3. The apparatus according to claim 1 or 2, wherein the calculation means is adapted to calculate the edge amount for each pixel included in the reference image.

4. An image processing apparatus comprising:

an acquisition means for acquiring (S901) a plurality of images including a reference image and a comparison image to be combined by combining corresponding pixels;

a calculation means for calculating (S904) an edge amount of each pixel in the comparison image to be combined with a corresponding pixel in the reference image, the edge amount corresponding to a degree of an edge for the pixel;

a determination means for determining (S905) composition weights of pixels in the comparison image with respect to a weight of corresponding pixels in the reference image when weighted averaging is performed, based on the edge amount of the pixels in the comparison image calculated by the calculation means; and

a composition means for combining (S906, S908) pixels of the reference image and of the comparison image by weighting corresponding pixels based on the composition weights determined by the determination means; **characterized in that** the determination means is adapted to determine, for each pixel in the comparison image to be combined with the corresponding pixel in the reference image, a composition weight with respect to the corresponding pixel in the reference image based on the edge amount of the pixel in the comparison image such that:

the composition weight (302) for a first edge amount (192) is lower than the composition weight (301) for a second edge amount (64), wherein the second edge amount is smaller than the first edge amount (1 92), and

the determined composition weight is, regardless of the edge amount of the comparison image and an edge amount of the reference image, equal or less than the composition weight of the corresponding pixel in the reference image for all pixels to be combined.

5. The apparatus according to claim 4, wherein the determination means is adapted to determine the composition weight without using an edge amount of the reference image.

6. The apparatus according to claim 4 or 5, wherein the calculation means is adapted to calculate the edge amount for each pixel included in the comparison image.

7. The apparatus according to claim 3 or 6, wherein the calculation means is adapted to calculate the edge amount of each pixel based on a difference in color or brightness between a target pixel and a pixel there around.

8. The apparatus according to any one of claims 1 to 7, wherein the determination means is adapted to determine the composition weight based on an edge amount such that the composition weight does not change when the edge amount does not exceed a predetermined threshold value (64), and such that the composition weight is smaller than the composition weight (301) corresponding to the predetermined threshold value (64) when the edge amount exceeds the predetermined threshold value (64).

9. The apparatus according to any one of claims 1 to 8, wherein the composition means is adapted to combine the reference image and the comparison image using position adjustment (S206) of the comparison image with respect to the reference image.

10. An image processing method comprising:

an acquisition step of acquiring (S201) a plurality of images including a reference image and a comparison image to be combined by combining corresponding pixels;
a calculation step of calculating (S202) an edge amount of each pixel in the reference image to be combined with a corresponding pixel in the comparison image, the edge amount corresponding to a degree of an edge for the pixel;
a determination step of determining (S203) composition weights of pixels in the comparison image with respect to a weight of corresponding pixels in the reference image when weighted averaging is performed, based on the edge amount of the corresponding pixels in the reference image calculated in the calculation step; and
a composition step of combining (S207, S209) pixels of the reference image and of the comparison image by weighting corresponding pixels based on the composition weights determined in the determination step;
**characterized in that** the determination step determines, for each pixel in the comparison image to be combined with the corresponding pixel in the reference image, a composition weight with respect to the corresponding pixel in the reference image based on the edge amount of the corresponding pixel in the reference image such that:

the composition weight (302) for a first edge amount (192) is lower than the composition weight (301) for a second edge amount (64), wherein the second edge amount is smaller than the first edge amount (192), and the determined composition weight is, regardless of the edge amount of the reference image and an edge amount of the comparison image, equal or less than the composition weight of the corresponding pixel in the reference image for all pixels to be combined.

11. The method according to claim 10, wherein the determination step determines the composition weight without using an edge amount of the comparison image.

12. An image processing method comprising:

an acquisition step of acquiring (S901) a plurality of images including a reference image and a comparison image to be combined by combining corresponding pixels;
a calculation step of calculating (S904) an edge amount of each pixel in the comparison image to be combined with a corresponding pixel in the reference image, the edge amount corresponding to a degree of an edge for the pixel;
a determination step of determining (S905) composition weights of pixels in the comparison image with respect to a weight of corresponding pixels in the reference image when weighted averaging is performed, based on the edge amount of the pixels in the comparison image calculated in the calculation step; and
a composition step of combining (S906, S908) pixels of the reference image and of the comparison image by weighting corresponding pixels based on the composition weights determined in the determination step;
**characterized in that** the determination step determines, for each pixel in the comparison image to be combined with the corresponding pixel in the reference image, a composition weight with respect to the corresponding pixel in the reference image based on the edge amount of the pixel in the comparison image such that:

the composition weight (302) for a first edge amount (192) is lower than the composition weight (301) for a second edge amount (64), wherein the second edge amount is smaller than the first edge amount (192), and the determined composition weight is, regardless of the edge amount of the comparison image and an edge amount of the reference image, equal or less than the composition weight of the corresponding pixel in the reference image for all pixels to be combined.

13. The method according to claim 12, wherein the determination step determines the composition weight without using an edge amount of the reference image

**14.** A computer-executable program with computer-executable instructions for causing, when loaded on a computer, the computer to perform the method according to any one of claims 10 to 13.

**15.** A computer-readable recording medium having recorded thereon the program according to claim 14.

**Patentansprüche**

**1.** Bildverarbeitungsvorrichtung, umfassend:

eine Erfassungseinrichtung zum Erfassen (S201) mehrerer Bilder, die ein Referenzbild und ein Vergleichsbild enthalten, welche durch Kombinieren von entsprechenden Pixeln zu kombinieren sind;
eine Berechnungseinrichtung zum Berechnen (S202) eines Kantenbetrags von jedem mit einem entsprechenden Pixel im Vergleichsbild zu kombinierenden Pixel im Referenzbild, wobei der Kantenbetrag einem Grad einer Kante für das Pixel entspricht;
eine Bestimmungseinrichtung zum Bestimmen (S203) von Zusammensetzungsgewichten von Pixeln im Vergleichsbild hinsichtlich eines Gewichts von entsprechenden Pixeln im Referenzbild, wenn gewichtetes Mitteln durchgeführt wird, basierend auf dem durch die Berechnungseinrichtung berechneten Kantenbetrag der entsprechenden Pixel im Referenzbild; sowie
eine Zusammensetzungseinrichtung zum Kombinieren (S207, S209) von Pixeln des Referenzbilds und des Vergleichsbilds durch Gewichten von entsprechenden Pixeln basierend auf den durch die Bestimmungseinrichtung bestimmten Zusammensetzungsgewichten;
**dadurch gekennzeichnet, dass** die Bestimmungseinrichtung dafür ausgelegt ist, für jedes mit dem entsprechenden Pixel im Referenzbild zu kombinierende Pixel im Vergleichsbild ein Zusammensetzungsgewicht hinsichtlich des entsprechenden Pixels im Referenzbild basierend auf dem Kantenbetrag des entsprechenden Pixels im Referenzbild derart zu bestimmen, dass:
das Zusammensetzungsgewicht (302) für einen ersten Kantenbetrag (192) niedriger als das Zusammensetzungsgewicht (301) für einen zweiten Kantenbetrag (64) ist, wobei der zweite Kantenbetrag kleiner als der erste Kantenbetrag (192) ist, und
das bestimmte Zusammensetzungsgewicht für alle zu kombinierenden Pixel gleich oder weniger als das Zusammensetzungsgewicht des entsprechenden Pixels im Referenzbild ist, unabhängig vom Kantenbetrag des Referenzbilds und einem Kantenbetrag des Vergleichsbilds.

**2.** Vorrichtung nach Anspruch 1, wobei die Bestimmungseinrichtung dafür ausgelegt ist, das Zusammensetzungsgewicht ohne Verwenden eines Kantenbetrags des Vergleichsbilds zu bestimmen.

**3.** Vorrichtung nach Anspruch 1 oder 2, wobei die Berechnungseinrichtung dafür ausgelegt ist, den Kantenbetrag für jedes im Referenzbild enthaltene Pixel zu berechnen.

**4.** Bildverarbeitungsvorrichtung, umfassend:

eine Erfassungseinrichtung zum Erfassen (S901) mehrerer Bilder, die ein Referenzbild und ein Vergleichsbild enthalten, welche durch Kombinieren von entsprechenden Pixeln zu kombinieren sind;
eine Berechnungseinrichtung zum Berechnen (S904) eines Kantenbetrags von jedem mit einem entsprechenden Pixel im Referenzbild zu kombinierenden Pixel im Vergleichsbild, wobei der Kantenbetrag einem Grad einer Kante für das Pixel entspricht;
eine Bestimmungseinrichtung zum Bestimmen (S905) von Zusammensetzungsgewichten von Pixeln im Vergleichsbild hinsichtlich eines Gewichts von entsprechenden Pixeln im Referenzbild, wenn gewichtetes Mitteln durchgeführt wird, basierend auf dem durch die Berechnungseinrichtung berechneten Kantenbetrag der Pixel im Vergleichsbild; sowie
eine Zusammensetzungseinrichtung zum Kombinieren (S906, S908) von Pixeln des Referenzbilds und des Vergleichsbilds durch Gewichten von entsprechenden Pixeln basierend auf den durch die Bestimmungseinrichtung bestimmten Zusammensetzungsgewichten;
**dadurch gekennzeichnet, dass** die Bestimmungseinrichtung dafür ausgelegt ist, für jedes mit dem entsprechenden Pixel im Referenzbild zu kombinierende Pixel im Vergleichsbild ein Zusammensetzungsgewicht hinsichtlich des entsprechenden Pixels im Referenzbild basierend auf dem Kantenbetrag des Pixels im Vergleichsbild derart zu bestimmen, dass:

das Zusammensetzungsgewicht (302) für einen ersten Kantenbetrag (192) niedriger als das Zusammensetzungsgewicht (301) für einen zweiten Kantenbetrag (64) ist, wobei der zweite Kantenbetrag kleiner als der erste Kantenbetrag (192) ist, und

das bestimmte Zusammensetzungsgewicht für alle zu kombinierenden Pixel gleich oder weniger als das Zusammensetzungsgewicht des entsprechenden Pixels im Referenzbild ist, unabhängig vom Kantenbetrag des Vergleichsbilds und einem Kantenbetrag des Referenzbilds.

5. Vorrichtung nach Anspruch 4, wobei die Bestimmungseinrichtung dafür ausgelegt ist, das Zusammensetzungsgewicht ohne Verwenden eines Kantenbetrags des Referenzbilds zu bestimmen.

6. Vorrichtung nach Anspruch 4 oder 5, wobei die Berechnungseinrichtung dafür ausgelegt ist, den Kantenbetrag für jedes im Vergleichsbild enthaltene Pixel zu berechnen.

7. Vorrichtung nach Anspruch 3 oder 6, wobei die Berechnungseinrichtung dafür ausgelegt ist, den Kantenbetrag jedes Pixels basierend auf einem Unterschied in Farbe oder Helligkeit zwischen einem Zielpixel und einem Pixel dort herum zu berechnen.

8. Vorrichtung nach einem der Ansprüche 1 bis 7, wobei die Bestimmungseinrichtung dafür ausgelegt ist, das Zusammensetzungsgewicht basierend auf einem Kantenbetrag derart zu bestimmen, dass das Zusammensetzungsgewicht sich nicht ändert, wenn der Kantenbetrag einen vorbestimmten Schwellenwert (64) nicht überschreitet, sowie derart, dass das Zusammensetzungsgewicht kleiner als das dem vorbestimmten Schwellenwert (64) entsprechende Zusammensetzungsgewicht (301) ist, wenn der Kantenbetrag den vorbestimmten Schwellenwert (64) überschreitet.

9. Vorrichtung nach einem der Ansprüche 1 bis 8, wobei die Zusammensetzungseinrichtung dafür ausgelegt ist, das Referenzbild und das Vergleichsbild unter Verwenden von Positionsanpassung (S206) des Vergleichsbilds hinsichtlich des Referenzbilds zu kombinieren.

10. Bildverarbeitungsverfahren, umfassend:

einen Erfassungsschritt zum Erfassen (S201) mehrerer Bilder, die ein Referenzbild und ein Vergleichsbild enthalten, welche durch Kombinieren von entsprechenden Pixeln zu kombinieren sind;

einen Berechnungsschritt zum Berechnen (S202) eines Kantenbetrags von jedem mit einem entsprechenden Pixel im Vergleichsbild zu kombinierenden Pixel im Referenzbild, wobei der Kantenbetrag einem Grad einer Kante für das Pixel entspricht;

einen Bestimmungsschritt zum Bestimmen (S203) von Zusammensetzungsgewichten von Pixeln im Vergleichsbild hinsichtlich eines Gewichts von entsprechenden Pixeln im Referenzbild, wenn gewichtetes Mitteln durchgeführt wird, basierend auf dem im Berechnungsschritt berechneten Kantenbetrag der entsprechenden Pixel im Referenzbild; sowie

einen Zusammensetzungsschritt zum Kombinieren (S207, S209) von Pixeln des Referenzbilds und des Vergleichsbilds durch Gewichten von entsprechenden Pixeln basierend auf den im Bestimmungsschritt bestimmten Zusammensetzungsgewichten;

**dadurch gekennzeichnet, dass** der Bestimmungsschritt für jedes mit dem entsprechenden Pixel im Referenzbild zu kombinierende Pixel im Vergleichsbild ein Zusammensetzungsgewicht hinsichtlich des entsprechenden Pixels im Referenzbild basierend auf dem Kantenbetrag des entsprechenden Pixels im Referenzbild derart bestimmt, dass:

das Zusammensetzungsgewicht (302) für einen ersten Kantenbetrag (192) niedriger als das Zusammensetzungsgewicht (301) für einen zweiten Kantenbetrag (64) ist, wobei der zweite Kantenbetrag kleiner als der erste Kantenbetrag (192) ist, und

das bestimmte Zusammensetzungsgewicht für alle zu kombinierenden Pixel gleich oder weniger als das Zusammensetzungsgewicht des entsprechenden Pixels im Referenzbild ist, unabhängig vom Kantenbetrag des Referenzbilds und einem Kantenbetrag des Vergleichsbilds.

11. Verfahren nach Anspruch 10, wobei der Bestimmungsschritt das Zusammensetzungsgewicht ohne Verwenden eines Kantenbetrags des Vergleichsbilds bestimmt.

12. Bildverarbeitungsverfahren, umfassend:

einen Erfassungsschritt zum Erfassen (S901) mehrerer Bilder, die ein Referenzbild und ein Vergleichsbild enthalten, welche durch Kombinieren von entsprechenden Pixeln zu kombinieren sind;

einen Berechnungsschritt zum Berechnen (S904) eines Kantenbetrags von jedem mit einem entsprechenden Pixel im Referenzbild zu kombinierenden Pixel im Vergleichsbild, wobei der Kantenbetrag einem Grad einer Kante für das Pixel entspricht;

einen Bestimmungsschritt zum Bestimmen (S905) von Zusammensetzungsgewichten von Pixeln im Vergleichsbild hinsichtlich eines Gewichts von entsprechenden Pixeln im Referenzbild, wenn gewichtetes Mitteln durchgeführt wird, basierend auf dem im Berechnungsschritt berechneten Kantenbetrag der Pixel im Vergleichsbild; sowie

einen Zusammensetzungsschritt zum Kombinieren (S906, S908) von Pixeln des Referenzbilds und des Vergleichsbilds durch Gewichten von entsprechenden Pixeln basierend auf den im Bestimmungsschritt bestimmten Zusammensetzungsgewichten;

**dadurch gekennzeichnet, dass** der Bestimmungsschritt für jedes mit dem entsprechenden Pixel im Referenzbild zu kombinierenden Pixel im Vergleichsbild ein Zusammensetzungsgewicht hinsichtlich des entsprechenden Pixels im Referenzbild basierend auf dem Kantenbetrag des Pixels im Vergleichsbild derart bestimmt, dass:

das Zusammensetzungsgewicht (302) für einen ersten Kantenbetrag (192) niedriger als das Zusammensetzungsgewicht (301) für einen zweiten Kantenbetrag (64) ist, wobei der zweite Kantenbetrag kleiner als der erste Kantenbetrag (192) ist, und

das bestimmte Zusammensetzungsgewicht für alle zu kombinierenden Pixel gleich oder weniger als das Zusammensetzungsgewicht des entsprechenden Pixels im Referenzbild ist, unabhängig vom Kantenbetrag des Vergleichsbilds und einem Kantenbetrag des Referenzbilds.

**13.** Verfahren nach Anspruch 12, wobei der Bestimmungsschritt das Zusammensetzungsgewicht ohne Verwenden eines Kantenbetrags des Referenzbilds bestimmt.

**14.** Computerausführbares Programm mit computerausführbaren Anweisungen zum Bewirken, beim Laden auf einen Computer, dass der Computer das Verfahren nach einem der Ansprüche 10 bis 13 durchführt.

**15.** Computerlesbares Aufzeichnungsmedium, auf dem das Programm nach Anspruch 14 aufgezeichnet ist.

**Revendications**

**1.** Appareil de traitement d'image comprenant :

un moyen d'acquisition destiné à acquérir (S201) une pluralité d'images incluant une image de référence et une image de comparaison à combiner en combinant des pixels correspondants ;

un moyen de calcul destiné à calculer (S202) une valeur de contour de chaque pixel de l'image de référence à combiner avec un pixel correspondant de l'image de comparaison, la valeur de contour correspondant à un niveau d'un contour pour le pixel ;

un moyen de détermination destiné à déterminer (S203) des poids de composition des pixels de l'image de comparaison relativement à un poids des pixels correspondants de l'image de référence lorsque l'on effectue un calcul de moyenne pondérée, en se basant sur la valeur de contour des pixels correspondants de l'image de référence calculée par le moyen de calcul ; et

un moyen de composition destiné à combiner (S207, S209) les pixels de l'image de référence et de l'image de composition en pondérant les pixels correspondants en se basant sur les poids de composition déterminés par le moyen de détermination,

**caractérisé en ce que** le moyen de détermination est apte à déterminer, pour chaque pixel de l'image de comparaison à combiner avec le pixel correspondant de l'image de référence, un poids de composition relativement au pixel correspondant de l'image de référence en se basant sur la valeur de contour du pixel correspondant de l'image de référence, de façon :

que le poids (302) de composition pour une première valeur (192) de contour soit plus bas que le poids (301) de composition pour une seconde valeur (64) de contour, la seconde valeur de contour étant plus petite que la première valeur (192) de contour ; et

que le poids de composition déterminé soit, quelles que soient la valeur de contour de l'image de référence et la valeur de contour de l'image de comparaison, égal ou inférieur au poids de composition du pixel correspondant de l'image de référence pour tous les pixels à combiner.

2. Appareil selon la revendication 1, dans lequel le moyen de détermination est apte à déterminer le poids de composition sans utiliser la valeur de contour de l'image de comparaison.

3. Appareil selon la revendication 1 ou 2, dans lequel le moyen de calcul est apte à calculer la valeur de contour pour chaque pixel inclus dans l'image de référence.

4. Appareil de traitement d'image comprenant :

un moyen d'acquisition destiné à acquérir (S901) une pluralité d'images incluant une image de référence et une image de comparaison à combiner en combinant des pixels correspondants ;
un moyen de calcul destiné à calculer (S904) une valeur de contour de chaque pixel de l'image de comparaison à combiner avec un pixel correspondant de l'image de référence, la valeur de contour correspondant à un niveau d'un contour pour le pixel ;
un moyen de détermination destiné à déterminer (S905) des poids de composition des pixels de l'image de comparaison relativement à un poids des pixels correspondants de l'image de référence lorsque l'on effectue un calcul de moyenne pondérée, en se basant sur la valeur de contour des pixels correspondants de l'image de comparaison calculée par le moyen de calcul ; et
un moyen de composition destiné à combiner (S906, S908) les pixels de l'image de référence et de l'image de composition en pondérant les pixels correspondants en se basant sur les poids de composition déterminés par le moyen de détermination,
**caractérisé en ce que** le moyen de détermination est apte à déterminer, pour chaque pixel de l'image de comparaison à combiner avec le pixel correspondant de l'image de référence, un poids de composition relativement au pixel correspondant de l'image de référence en se basant sur la valeur de contour du pixel de l'image de comparaison, de façon :

que le poids (302) de composition pour une première valeur (192) de contour soit plus bas que le poids (301) de composition pour une seconde valeur (64) de contour, la seconde valeur de contour étant plus petite que la première valeur (192) de contour ; et
que le poids de composition déterminé soit, quelles que soient la valeur de contour de l'image de comparaison et la valeur de contour de l'image de référence, égal ou inférieur au poids de composition du pixel correspondant de l'image de référence pour tous les pixels à combiner.

5. Appareil selon la revendication 4, dans lequel le moyen de détermination est apte à déterminer le poids de composition sans utiliser la valeur de contour de l'image de référence.

6. Appareil selon la revendication 4 ou 5, dans lequel le moyen de calcul est apte à calculer la valeur de contour pour chaque pixel inclus dans l'image de comparaison.

7. Appareil selon la revendication 3 ou 6, dans lequel le moyen de calcul est apte à calculer la valeur de contour de chaque pixel en se basant sur une différence de couleur ou de luminosité entre un pixel cible et un pixel autour de lui.

8. Appareil selon l'une quelconque des revendications 1 à 7, dans lequel le moyen de détermination est apte à déterminer le poids de composition en se basant sur une valeur de contour de façon que le poids de composition ne change pas lorsque la valeur de contour n'excède pas une valeur prédéterminée de seuil (64), et de façon que le poids de composition soit plus petit que le poids (301) de composition correspondant à la valeur prédéterminée de seuil (64) lorsque la valeur de contour excède la valeur prédéterminée de seuil (64).

9. Appareil selon l'une quelconque des revendications 1 à 8, dans lequel le moyen de composition est apte à combiner l'image de référence et l'image de comparaison en utilisant un ajustement (S206) de position de l'image de comparaison relativement à l'image de référence.

10. Procédé de traitement d'image comprenant :

une étape d'acquisition consistant à acquérir (S201) une pluralité d'images incluant une image de référence et une image de comparaison à combiner en combinant des pixels correspondants ;
une étape de calcul consistant à calculer (S202) une valeur de contour de chaque pixel de l'image de référence à combiner avec un pixel correspondant de l'image de comparaison, la valeur de contour correspondant à un niveau d'un contour pour le pixel ;

une étape de détermination consistant à déterminer (S203) des poids de composition des pixels de l'image de comparaison relativement à un poids des pixels correspondants de l'image de référence lorsque l'on effectue un calcul de moyenne pondérée, en se basant sur la valeur de contour des pixels correspondants de l'image de référence calculée à l'étape de calcul ; et

une étape de composition consistant à combiner (S207, S209) les pixels de l'image de référence et de l'image de composition en pondérant les pixels correspondants en se basant sur les poids de composition déterminés à l'étape de détermination,

**caractérisé en ce que** l'étape de détermination détermine, pour chaque pixel de l'image de comparaison à combiner avec le pixel correspondant de l'image de référence, un poids de composition relativement au pixel correspondant de l'image de référence en se basant sur la valeur de contour du pixel correspondant de l'image de référence, de façon :

que le poids (302) de composition pour une première valeur (192) de contour soit plus bas que le poids (301) de composition pour une seconde valeur (64) de contour, la seconde valeur de contour étant plus petite que la première valeur (192) de contour ; et

que le poids de composition déterminé soit, quelles que soient la valeur de contour de l'image de référence et la valeur de contour de l'image de comparaison, égal ou inférieur au poids de composition du pixel correspondant de l'image de référence pour tous les pixels à combiner.

**11.** Procédé selon la revendication 10, dans lequel l'étape de détermination détermine le poids de composition sans utiliser une valeur de contour de l'image de comparaison.

**12.** Procédé de traitement d'image comprenant :

une étape d'acquisition consistant à acquérir (S901) une pluralité d'images incluant une image de référence et une image de comparaison à combiner en combinant des pixels correspondants ;

une étape de calcul consistant à calculer (S904) une valeur de contour de chaque pixel de l'image de comparaison à combiner avec un pixel correspondant de l'image de référence, la valeur de contour correspondant à un niveau d'un contour pour le pixel ;

une étape de détermination consistant à déterminer (S905) des poids de composition des pixels de l'image de comparaison relativement à un poids des pixels correspondants de l'image de référence lorsque l'on effectue un calcul de moyenne pondérée, en se basant sur la valeur de contour des pixels correspondants de l'image de comparaison calculée à l'étape de calcul ; et

une étape de composition consistant à combiner (S906, S908) les pixels de l'image de référence et de l'image de composition en pondérant les pixels correspondants en se basant sur les poids de composition déterminés à l'étape de détermination,

**caractérisé en ce que** l'étape de détermination détermine, pour chaque pixel de l'image de comparaison à combiner avec le pixel correspondant de l'image de référence, un poids de composition relativement au pixel correspondant de l'image de référence en se basant sur la valeur de contour du pixel de l'image de comparaison, de façon :

que le poids (302) de composition pour une première valeur (192) de contour soit plus bas que le poids (301) de composition pour une seconde valeur (64) de contour, la seconde valeur de contour étant plus petite que la première valeur (192) de contour ; et

que le poids de composition déterminé soit, quelles que soient la valeur de contour de l'image de comparaison et la valeur de contour de l'image de référence, égal ou inférieur au poids de composition du pixel correspondant de l'image de référence pour tous les pixels à combiner.

**13.** Procédé selon la revendication 12, dans lequel l'étape de détermination détermine le poids de composition sans utiliser la valeur de contour de l'image de référence.

**14.** Programme exécutable informatiquement avec des instructions exécutables informatiquement destiné à amener, lorsqu'il est chargé sur un processeur, le processeur à mettre en oeuvre le procédé selon l'une quelconque des revendications 10 à 13.

**15.** Support d'enregistrement lisible informatiquement sur lequel est enregistré le programme selon la revendication 14.

FIG.1

START

ACQUIRE IMAGE ⟋ S201

CALCULATE FEATURE AMOUNT ⟋ S202

CALCULATE COMPOSITION WEIGHT ⟋ S203

PREPARE IMAGE ADDITION ⟋ S204

I←1
PERFORM LOOP NUMBER OF TIMES
CORRESPONDING TO NUMBER OF
COMPARISON IMAGES
I>NUMBER OF COMPARISON IMAGES ⟋ S205

POSITION ADJUSTMENT ⟋ S206

WEIGHTED ADDITION ⟋ S207

I←I+1
PERFORM LOOP NUMBER OF TIMES
CORRESPONDING TO NUMBER OF
COMPARISON IMAGES
(I>NUMBER OF
COMPARISON IMAGES) ⟋ S208

WEIGHTED AVERAGING ⟋ S209

IMAGE OUTPUT ⟋ S210

END

FIG.2

COMPOSITION WEIGHT

FIG.3

FIG.4

COMPOSITION WEIGHT

FIG.5

COMPOSITION WEIGHT

FIG.6

COMPOSITION WEIGHT

FIG.7

**FIG.8**

START

ACQUIRE IMAGE — S901

PREPARE IMAGE ADDITION — S902

I←1
PERFORM LOOP NUMBER OF TIMES
CORRESPONDING TO NUMBER OF
COMPARISON IMAGES
I>NUMBER OF COMPARISON IMAGES — S903

CALCULATE FEATURE AMOUNT — S904

CALCULATE COMPOSITION WEIGHT — S905

WEIGHTED ADDITION — S906

I←I+1
PERFORM LOOP NUMBER OF
TIMES CORRESPONDING TO
NUMBER OF COMPARISON IMAGES
(I>NUMBER OF
COMPARISON IMAGES) — S907

WEIGHTED AVERAGING — S908

IMAGE OUTPUT — S909

END

# FIG.9

**FIG.10**

**EP 2 407 926 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002223374 A
- US 2008205854 A1
- EP 2134079 A1
- US 2010157079 A1